**Europäisches Patentamt**

**European Patent Office**

**Office européen des brevets**

(11) Publication number : **0 312 866 B1**

# EUROPEAN PATENT SPECIFICATION

(45) Date of publication of patent specification :
04.01.95 Bulletin 95/01

(51) Int. Cl.$^6$ : **G06F 9/46, G06F 12/14**

(21) Application number : **88116741.5**

(22) Date of filing : **10.10.88**

---

(54) **A file sharing system having locking protocol.**

---

table

(30) Priority : **19.10.87 US 110362**

(43) Date of publication of application :
**26.04.89 Bulletin 89/17**

(45) Publication of the grant of the patent :
**04.01.95 Bulletin 95/01**

(84) Designated Contracting States :
**DE FR GB IT**

(56) References cited :
**EP-A- 0 010 190
EP-A- 0 094 841
US-A- 4 104 718
COMPUTER DESIGN, vol. 24, no. 8, July 1985,
pages 89-92, Littleton, Massachusetts, USA;
M. DURR: "Operating System aimed at PCs
smooths networking"**

(56) References cited :
**PROCEEDINGS OF THE 1st INTERNATIONAL
CONFERENCE ON COMPUTER WORKS-
TATIONS, 11-14 November 1985, pages
231-239, San José, California, US; M. DE-
VARAKONDA et al.: "Networking a large num-
ber of Workstations Using UNIX United"**

(73) Proprietor : **International Business Machines
Corporation
Old Orchard Road
Armonk, N.Y. 10504 (US)**

(72) Inventor : **Catino, Robert Joseph
156 Helen Street
Binghamton New York 13905 (US)**
Inventor : **Chan, Tom Ka-Moon
40 Wickstead Way
Thornhill Ontario L3T5E4 (CA)**

(74) Representative : **Jost, Ottokarl, Dipl.-Ing.
IBM Deutschland Informationssysteme GmbH,
Patentwesen und Urheberrecht
D-70548 Stuttgart (DE)**

## Description

This invention generally relates to multi-user systems for managing databases, and more particularly, to such systems having locking protocols.

Locking protocols are employed in multi-user environments to control access to shared data objects. To elaborate, a multi-user database managing system may include a file access processor and a plurality of application support processors. The file access processor provides access to a database, and the application support processors are connected to the file access processor to transmit inquires to and to receive responses from the file access processor. For example, a user at a support processor may add data to, delete data from, or change data in records or files stored in the database. Often, several users at different support processors may concurrently access the same data in the database --a condition referred to as concurrency. Under such circumstances, it is usually desirable to control access to the data items so that, for example, one user does not change data items being studied by a second user. Locking protocols have been developed to control such user access.

In "Computer Design", VOL. 24, no. 8, July 1985, pages 89 - 92, Littleton, Massachusetts, USA an operating system is described in an article "OPERATING SYSTEM AIMED AT PCs SMOOTHS NETWORKING", in which implicit locks on data objects are held while the file server is processing a logical unit of work consisting of a series of related data processing requests, and to automatically remove the implicit locks on data objects at the end of processing the logical unit of work, and in which further explicit locks are held on data objects after the end of processing the logical unit of work.

The problem, however, with the above discussed prior art locking protocols is that they are usually invoked automatically by a file access processor in response to receiving data processing requests from users at support processors. Under normal operating conditions, these locking protocols cannot be expressly manipulated by a user at a support processor, and in fact, such a user may not even be aware of the existence of the locking protocols. Moreover, these prior art locking protocols are normally automatically terminated by the file access processor after the complete processing of a work unit, which is conventionally defined as a group of logically related data processing requests from a particular application support processor. Thus, these prior art locking protocols do not allow the locks, which are placed on data objects during a particular work unit, to be maintained on the data objects after the completion of that particular work unit.

Therefore, it is the object of the present invention to provide a multi-user system for managing a database with a locking protocol that may be explicitly controlled by a user of the system.

This object of the invention is accomplished by the features of claim 1. Further advantages of the invention are characterized in the subclaims.

A multi-user system of the invention for managing a database having a multitude of data objects arranged in a hierarchy, comprises a file access processor for accessing the database and managing requests relating to said data objects;

a plurality of application support processors coupled to the file access processor, each of said application support processors including means for transmitting to said file access processor a request to read and/or update a specified first data object and an explicit request for one of a plurality of explicit locks on said first data object pursuant to said read and/or update request, and a data processing request to read and/or update a second specified data object without explicitly requesting an explicit lock on any of said data objects; and wherein said file access processor includes means, responsive to the explicit request for said explicit lock on said first data object, for providing said explicit lock only on said first data object, and means (54), responsive to the data processing request to read and/or update said second data object without explicitly requesting an explicit lock on any of the data objects, for providing one of a plurality of implicit locks on said second data object and all other data objects which descend from a same node as said second data object in said hierarchy; and said file access processor includes means, responsive to another request to read or update a specific data object pursuant to an associated explicit lock, for determining if a conflict exists with any previously established explicit or implicit lock; and wherein said plurality of explicit locks comprise an explicit exclusive lock in which a requesting application support processor has exclusive read and update access to said first data object and the other application support processors are denied all access to and all locks on said first data object, an explicit update lock in which a requesting application support processor has read and update access to said first data object and another application support processor can obtain an implicit share lock on said first data object, and an explicit share lock in which a requesting application support processor (14) has read access to said first data object and all of the other application support processors have read access to said first data object but cannot obtain exclusive access to or an explicit update lock, explicit exclusive lock or implicit exclusive lock on said first data object; and

said plurality of implicit locks comprise an implicit exclusive lock on said second data object in which the other application support processors are denied all access to and all explicit and implicit locks on said second da ta object, and an implicit share lock on said second data object in which the other application support processors can obtain an explicit share lock, an explicit update lock and an implicit share lock on said second data object but are denied an explicit exclusive lock and an implicit exclusive lock on said second data object.

Further benefits and advantages of the invention will become apparent from the subclaims and the following detailed description given with reference to the accompanying drawings, which specify and show preferred embodiments of the invention.

Figure 1 is a representation of a data base arranged according to a hierarchical order.

Figure 2 is a block diagram schematically illustrating a file sharing system according to this invention.

Figure 3 is a block diagram schematically showing in greater detail, the locking means of the file sharing system.

Figure 4 is a table showing the compatibility of the locking modes that may be implemented by the locking means of the file sharing system.

Figure 5 graphically represents the relative strengths of the locking modes that may be implemented by the locking means.

As previously mentioned, locking protocols or systems are used to control access to data objects when multiple users concurrently access the same data object or group of data objects in a database. One important consideration in designing a locking protocol is the selection of the lockable unit --that is, the aggregate of data objects that are locked. For example, a whole area of data objects could be locked, as well as individual data objects. As a general rule, the broader, or wider, the lockable unit, the lower the concurrency-- that is, the fewer the number of users that can share a system at a given time. On the other hand, a particular user may want to lock a large number of data objects, and the narrower, or finer, the lockable unit, the greater the time and expense required to lock a large number of data objects. Generally, for a simple transaction --one that accesses only a few records-- a narrow lockable unit is preferred, but for a complex transaction --one that accesses a large number of records-- a wide lockable unit is preferred. Because a single data base may be accessed for both simple and complex transactions, it is usually desirable to be able to lock different widths of data aggregates.

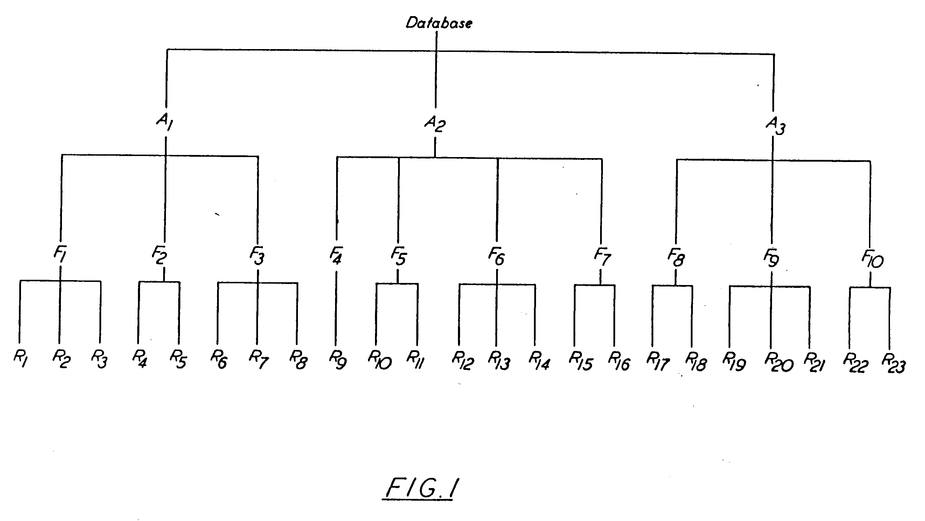

Often, the data items of a data base can be considered as being organized in a hierarchy, where the data items of the data base, taken as a whole, form a single class, that class is divided into a plurality of groups, and each of these groups consists of one or more sets of data items. Figure 1 presents a typical hierarchy structure for a data base; and the data base comprises a number of areas $A_1$-$A_3$, each area includes one or more files $F_1$-$F_{10}$, and each file has one or more data objects or records $R_1$-$R_{23}$. As so described, the data base consists of four levels, with each level consisting of one or more nodes.

Conventionally, the nodes of one level that belong to a particular node of the immediately higher level, are said to be children of the latter node; and the node of one level to which the nodes of an immediately lower level belong, is said to be a parent of the latter nodes. For example, with the example shown in Figure 1, files $F_1$ and $F_2$ are children of area $A_1$, files $F_4$, $F_5$ and $F_6$ are children of area $A_2$. File $F_3$ is the parent of records $R_7$ and $R_8$, and area $A_3$ is the parent of file $F_8$. For analogous reasons, records $R_7$ and $R_8$ are said to be descendants of area $A_1$, while records $R_{12}$ and $R_{13}$ are said to be descendants of area $A_2$; and area $A_2$ is said to be an ancestor of records $R_9$ and $R_{10}$, and area $A_1$ is said to be an ancestor of records $R_7$ and $R_8$.

In a typical locking protocol, each node of the hierarchy can be locked in any one of several modes. If a node is locked in an exclusive access mode for a particular application support processor, then that node and all of its descendants can be read or changed by, and only by, that particular support processor. If a node is locked in a shared access mode for a particular application support processor, then that node and all of its descendants can be read by that processor and by all other support processors, but the node and its descendants cannot be changed by any of the support processors. Conventionally, it is often said that if a particular node is locked in an exclusive or shared access mode, all the descendants of that node are automatically locked in that same mode.

With many data processing requests, it is desirable that a user have the option to lock certain data items in either an exclusive access mode or a shared access mode, even though it is not necessary that those data items be currently locked in either of these modes. A locking mode referred to as an intention mode is used with a hierarchical database to lock or tag particular nodes of the database so that descendants of those nodes may subsequently be locked in the exclusive access mode or the shared access mode. More specifically, when a particular node is implicitly placed in an intention mode, in response to receiving a data processing request from one application support processor, all the ancestors of that node are also placed in the intention mode, and this prevents all the descendants of the subject node from being locked for exclusive or shared access by any other application support processor. As a general rule, with reference to Figure 1, prior to locking particular nodes or data items, intention access is first obtained to the area or file containing that node or data item, and, subsequently, the desired locks are placed on the desired nodes or data items.

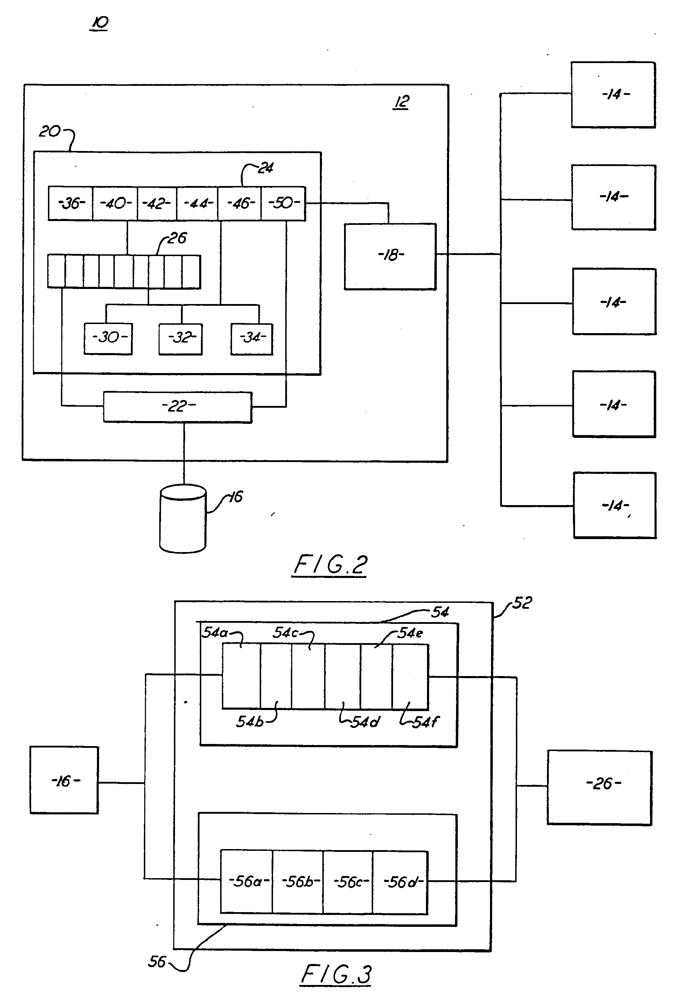

Figure 2 shows file sharing system 10 employing a locking protocol according to the present invention; and generally the file sharing system comprises file access processor 12 and a plurality of application support processors 14. Processor 12 provides access to a database having a multitude of data objects, and which may be stored on an external storage medium 16, and this processor 12 is provided to process requests from processors 14 relating to those data objects. Support processors 14 are connected to file processor 12 to read and update the data objects in the database, and each support processor includes means to transmit to the file access processor requests to process data objects.

File Access Processor 12 services requests from the set of Application Support Processors 14 which can exist in a global network, with each Application Support Processor sharing access to data in files stored by and managed by one or more File Access Processors 12. Each Application Support Processor 14 also maintains an internal cache of file information to improve performance by reducing communications with the File Access Processor 12 for information about files. File Access Processor 12 manages access to a set of data files and information about files held in file directories. File directories allow for managing file collection, relate to each other hierarchically, and may be shared. The File Access Processor also maintains an internal set of catalogs, which are repositories of internal information in the File Access Processor for its own internal use, and which are not directly available and accessible to Application Support Processors, as are the data files and directories.

The file access processor includes service system 18, data access system 20 and storage access system 22. The functions of these components of the file access processor are generally known in existing computer systems, and are not described herein in detail, but a summary of their functions is given below to establish perspective. The Service System 18 provides environmentally dependent services for the processor 12, including the initial receipt of requests, forwarding requests for file access, and dispatching an activation of the Data Access System 20. The Data Access System 20 processes individual requests, and maintains a set of catalogs that contain control and descriptive information concerning the set of files managed by the File Access Processor 12. The Storage Access System 22 manages the data blocks that comprise the data files, the set of records that comprise the catalogs, the set of locks that permit concurrency, and the grouping of work items that represent recovery units.

The Data Access System has a number of subcomponents including the Session Management Subcomponent 24, the Request Management Subcomponent 26, the Space Management Subcomponent 30, the Catalog Management Subcomponent 32, and the Cache Management Subcomponent 34. The Session Management Subcomponent receives requests through the Service System and it is the focal point of control, and the Session Management includes a set of fundamental services for response formulation. Session Management determines which Request Management Subcomponent routine should be invoked to service a request and passes control to Request Management; and at the end of request processing, Request Management passes control back to the Session Management Subcomponent to finish request processing and to forward the requested response.

The Session Management Subcomponent includes a number of service routines. A start-up routine 36 is used to initialize Data Access System control structures, and a storage Pool routine 40 is used to maintain and dispense working storage for control structures. A response routine 42 is employed to assist Request Management Subcomponent routines build response messages, and to assemble the response and cache update information into a properly formatted response message. A work routine 44 is utilized to coordinate and initiate processing required when a logical group of requests are "committed" or "rolled back", i.e. manage activities at designated points of recovery.

The Work routine invokes the Catalog Management Subcomponent to accomplish catalog updates based upon Work Request Blocks (WRBs) built by Request Management, and the work routine invokes the Space Management Subcomponent to coordinate the update of the Space Catalog. The Work routine also invokes the Storage Access System to commit changes to file blocks and catalogs, and invokes the Cache Management Subcomponent 34 to store cache notification information.

The Session Management Subcomponent further includes a Terminate routine 46 to clean up control structures at the conclusion of an activation of the Data Access System, and a WRB Condense routine 50, which supports reduction of multiple changes to the same catalog entry into a single change. The Data Access System utilizes several catalogs for managing file and directory information, and each entry in the Object Catalog, for example, contains descriptive and control information about a particular file. Work Request Blocks are used to save catalog change information from the time of file request processing until the time that the work unit is committed. When multiple WRBs exist for the same catalog entry, they are condensed into a single WRB.

The Request Management Subcomponent 26 includes routines for each type of request the Data Access

4

System is designed to process. As illustrated in Figure 2, Request Management includes nine routines, although a typical Request Management subsystem has thirty to forty routines. Request Management utilizes the Catalog Management Subcomponent to access catalogs, uses the Space Management Subcomponent 30 to manage logical space, and employs the Cache Management Subcomponent for cache control processing. In addition, Request Management builds and maintains WRBs, which go the Work routine at commit time -- that is, at the successful completion of a work unit --to drive catalog and cache updates. The Request Management Subcomponent 26 utilizes the Storage Access System 22 directly to engage or disengage one or more logical locks that represent commitments against files and catalogs; and Request Management invokes the Storage Access System to add, delete, and update data blocks associated with particular files according to the requirements of the current request.

The Catalog Management Subcomponent assembles the control structures required to invoke the Storage Access System 22 to access the set of catalogs that the Data Access System 20 utilizes for control information for its set of files. The Space Management Subcomponent manages the logical space for an Application Support Processor represented by a FSCB (File Space Control BLock), a logical representation of the Space Catalog entry for the Application Support Processor. Requests that affect logical space consumption due to changes in the storage consumed by files accomplish space accounting though the Space Management Subcomponent. The Space Management Subcomponent also uses the Catalog Management Subcomponent 32 to access the Space Catalog.

The Cache Management Subcomponent is invoked by the Work routine of the Session Management Subcomponent at the successful completion of a work unit to update the cached data maintained by the Data Access System 20, using information in WRBs built by the Request Management Subcomponent to establish which directories are to be supported in the cache for the current Application Support Processor.

With particular reference to Figure 3, the file access processor includes locking system or means 52 to lock data objects for selected application support processors to limit access to locked data objects by all the application support processors other than the selected support processors. Preferably, locking means 52 is a component of storage access system 22, and this locking means includes implicit locking means 54 and explicit locking means 56. Implicit locking means 54 is provided to place implicit locks on data objects automatically in response to receiving data processing requests from the application support processors, and explicit locking means 56 is provided to place explicit locks on data objects in response to receiving explicit locking requests from the application support processors, and independent of data processing requests from the support processors.

Several types of implicit locking modes are commonly used with multi-user systems; and, for example, implicit locking means 54 includes means 54a, b, c, d, e and f to place data objects in an exclusive access mode, a shared access mode, an intention exclusive mode, an intention shared mode, and a shared with intention exclusive mode, respectively. When a data object is implicitly locked in an exclusive access mode in response to a particular request submitted to the data access system by a selected application support processor, that, and only that, application support processor has exclusive read and update access to the data object, and all of the application support processors, other than that one processor, are denied all access to the data object. In a hierarchical database, when a given node is implicitly locked in an exclusive access mode in response to a particular request submitted to the data access system by a selected application support processor, that, and only that, application support processor has exclusive read and update access to that node and to all of its descendants; and all of the application support processors, other than that one processor, are denied all access to the given node and to all of its descendants.

When a data object is implicitly locked in a shared access mode in response to a particular request submitted to the data access system by a selected application support processor, that selected application support processor has read access to the data object, and all of the application support processors, other than that selected one, are prevented from obtaining exclusive access to that data object. In a hierarchical data base, when a given node is locked in a shared access mode in response to a particular request submitted to the data access system by a selected application support processor, that selected application support processor has read access to that node and to all of its descendants; and all of the application support processors, other than that selected one, are prevented from obtaining exclusive access to that node or any of its descendants.

When a data object is implicitly placed in an intention exclusive mode in response to a particular request submitted to the data access system by a selected application support processor, that application support processor has the option of later implicitly activating the locking means to convert the data object to the exclusive access mode; and all of the application support processors, other than that selected one, are prevented from implicitly activating the locking means to lock the data object in the exclusive access or shared access mode. In a hierarchical data base, when a given node is placed in the implicit intention exclusive mode in response to a particular request submitted to the data access system by a selected application support processor, that selected application support processor has the option of later implicitly activating the locking means to place any of the descendants of that node in the exclusive access mode; and all of the application support processors, other than that selected one, are prevented from implicitly activating the locking means to place the given node or any of its descendants in either the exclusive access or the shared access modes.

When a data object is implicitly placed in an intention share mode in response to a particular request submitted to the data access system by a selected application support processor, that selected support processor has the option of later implicitly activating the locking means to convert the data object to the share mode; and all of the application support processors, other than that selected one, are prevented from implicitly activating the locking means to place the data object in the exclusive access mode. In a hierarchical database, when a given node is implicitly placed in an intention share mode in response to a particular request submitted to the data access system by a selected application support processor, that selected application support processor has the option of later implicitly activating the locking means to place any of the descendants of that node in the share mode; and all of the application support processors, other than that selected one, are prevented from implicitly activating the locking means to place the given node or any of its descendants in an implicit exclusive access mode.

When a data object is implicitly placed in a share with intention exclusive mode in response to a particular request submitted to the data access system by a selected application support processor, that selected application support processor has read access to the data object and has the option of later implicitly activating the locking means to place the data object in the exclusive mode; and all of the application support processors, other than the selected one, are prevented from implicitly activating the locking means to place the data object in either the exclusive access or the shared access modes. In a hierarchial data base, when a given node is implicitly placed in the share with intention exclusive mode in response to an activation of the data access system by a selected application support processor, that selected application support processor has read access to that node and to all of its descendants, and this support processor further has the option of later implicitly activating the locking means to place any of the descendants of the given node in the exclusive access mode. At the same time, all of the application support processors, other than the selected one, are prevented from implicitly activating the locking means to place the given node or any of its descendants in either the exclusive access or the shared access modes.

In accordance with the present invention, explicit locking means 56 is provided with means 56a, b and c to place data objects in several, additional, explicit locking modes referred to as the explicit exclusive mode, the explicit update mode, and the explicit share mode, respectively. When a given application support processor expressly activates the locking means to lock a given data object in the explicit exclusive mode, that processor, and only that processor, has exclusive read and update access to the data object, preferably until the explicit lock is released by a user at the selected support processor. All of the support processors, other than that selected one, are denied all access to the data object; and, in effect, the given data object is taken out of the database for an indefinite period of time for the exclusive use of the selected support processor.

When a given application support processor expressly activates the locking means to lock a data object in the explicit update mode, that processor has read and update access to the data object preferably until the explicit lock is released by a user at the selected support processor. All of the support processors, other than the selected one, are prevented from obtaining exclusive access to the data object either by the explicit exclusive mode or the implicit exclusive mode, or from obtaining explicit update access to the data object. The other application support processors are allowed, though, to read the data object and to activate the locking means to place the data object in the implicit intention share mode or the share mode.

When a given application support processor expressly activates the locking means to lock a data object in the explicit share mode, that application processor has read access to the data object, preferably until the explicit lock is released by a user at the selected support processor. All of the other application support processors may obtain read access to the data object and, in fact, may also activate the locking means to place additional explicit share locks on the data object. Further, the other application support processors may activate the locking means to place the data object in the intention share mode or the share mode, but not in either the explicit exclusive or explicit update modes.

In a conventional locking protocol, all of the implicit locks placed on data objects during the processing of a given work unit, are automatically terminated when the data access system has completed processing that work unit. In this way, the implicit locks do not affect or interfere with subsequent processing requests from the same, or other, application support processors. The explicit locking means of the present invention includes means 56d to maintain the explicit locks after the completion of processing particular work units; and, preferably, the explicit locks are maintained until they are explicitly released by a user. Thus, a user has the option of maintaining these explicit locks between activations of the data access system and for indefinite periods of time.

As will be understood by those of ordinary skill in the art, the locking protocol disclosed herein can be used in multi-user systems other than file sharing systems; and, for instance, the locking protocol may be employed with a suitable database system accessed by plural users.

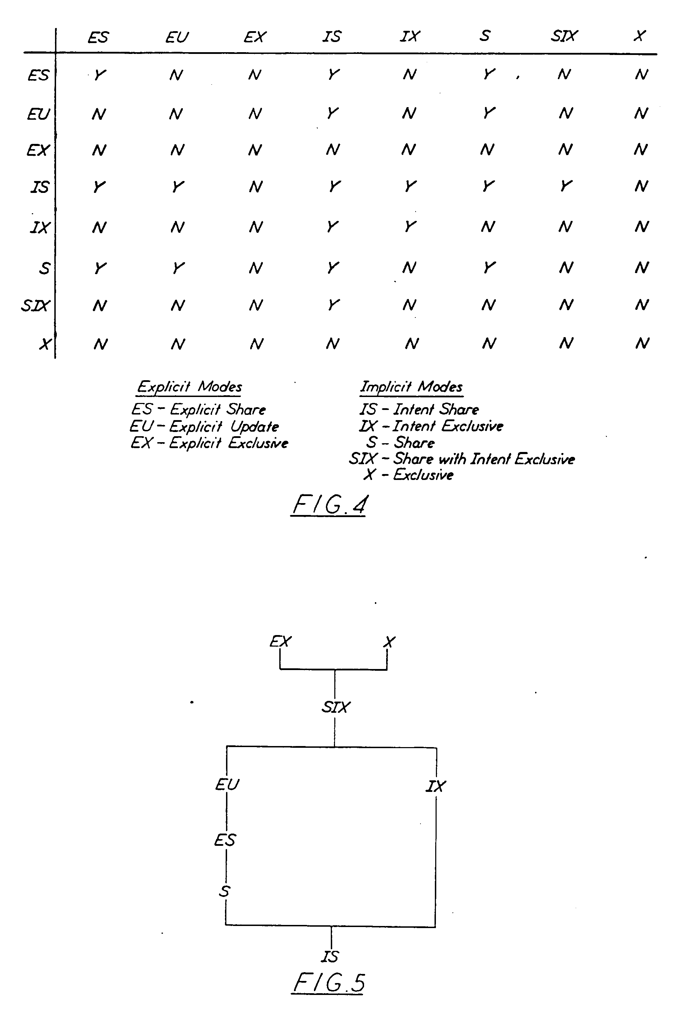

Different users may each, either implicitly or explicitly, request a lock on the same data object, and Figure 4 is a table showing the compatibility of the above-described locking modes. The locking modes are listed in columns across the top of the table and in rows across the left side of the table. Two locking modes are compatible if a Y is located at the intersection of the column and row identified by the locking modes, and two locking modes are not compatible if an N is listed at the intersection of the column and row identified by those locking modes. For example, the explicit share mode is compatible with itself, which means that multiple users may each lock a given data item in that mode; however, the explicit update mode is not compatible with itself, which means that two different users may not each concurrently lock a given data item in that mode.

Also, the explicit share mode is compatible with the implicit share mode, which means that one user may be able to lock a given data object in the implicit share mode even though that same data object is currently locked in the explicit share mode, either by the same or another user. The explicit share mode is not compatible with the explicit update mode, however, and this means that a user may not lock a given data object in the explicit update mode if that data object currently is locked in the explicit share mode, either by the same or another user.

Figure 4 also shows that the explicit exclusive mode is incompatible with all the other modes, that the implicit exclusive mode is incompatible with all of the other modes, and that the implicit share with intention exclusive mode is incompatible with all of the other modes except the intention share mode. The intention share mode is compatible with all of the other modes except the explicit exclusive and implicit exclusive modes; and the implicit share mode is compatible with all of the other modes except the explicit and implicit exclusive modes, the intention share mode, and the share with intention exclusive mode.

Figure 5 is a general representation of the relative strengths of the locking modes based on their compatibility. The explicit exclusive and implicit exclusive modes are considered to be the strongest because neither of these modes is compatible with any of the other modes. The share with intention exclusive mode is the next strongest mode because it is compatible with only one other mode--the intention shared mode. The explicit update mode is considered to be stronger than the explicit share mode, the latter mode is stronger than the implicit share mode, and the implicit share mode is stronger than the intention share mode. The intention exclusive mode is considered to be weaker than the explicit exclusive, the implicit exclusive and the share with intent exclusive modes, but stronger than the intention share mode.

## Claims

1. A multi-user system (10) for managing a database (16) having a multitude of data objects arranged in a hierarchy, said system comprising:

a file access processor (12) for accessing the database and managing requests relating to said data objects;

a plurality of application support processors (14) coupled to the file access processor, each of said application support processors including means for transmitting to said file access processor a request to read and/or update a specified first data object and an explicit request for one of a plurality of explicit locks on said first data object pursuant to said read and/or update request, and a data processing request to read and/or update a second specified data object without explicitly requesting an explicit lock on any of said data objects; and wherein

said file access processor includes means (56), responsive to the explicit request for said explicit lock on said first data object, for providing said explicit lock only on said first data object, and means (54), responsive to the data processing request to read and/or update said second data object without explicitly requesting an explicit lock on any of the data objects, for providing one of a plurality of implicit locks on said second data object and all other data objects which descend from a same node as said second data object in said hierarchy; and

said file access processor includes means, responsive to another request to read or update a specific data object pursuant to an associated explicit lock, for determining if a conflict exists with any previously established explicit or implicit lock; and wherein

said plurality of explicit locks comprise an explicit exclusive lock in which a requesting application support processor (14) has exclusive read and update access to said first data object and the other application support processors are denied all access to and all locks on said first data object, an explicit update lock in which a requesting application support processor (14) has read and update access to said first data object and another application support processor can obtain an implicit share lock on said first data object, and an explicit share lock in which a requesting application support processor (14) has read access to said first data object and all of the other application support processors have read access to said first data object but cannot obtain exclusive access to or an explicit update lock, explicit exclusive lock or implicit exclusive lock on said first data object; and

said plurality of implicit locks comprise an implicit exclusive lock on said second data object in which the other application support processors are denied all access to and all explicit and implicit locks on said second data object, and an implicit share lock on said second data object in which the other application support processors can obtain an explicit share lock, an explicit update lock and an implicit share lock on said second data object but are denied an explicit exclusive lock and an implicit exclusive lock on said second data object.

2. A system as set forth in claim 1 wherein

said plurality of implicit locks comprise an intent exclusive lock in which the requesting application support processor has the option of later obtaining an implicit exclusive lock in place of the intent exclusive lock on said second data object, and an intent share lock in which the requesting application support processor has the option of later obtaining an implicit share lock in place of the intent share lock on said second data object.

3. A system as set forth in claim 2 wherein the means for determining if a conflict exists determines the conflicts as indicated by the following compatibility chart in which a "Y" in any position indicates compatibility between the corresponding locks, and an "N" in any position indicates a conflict between the corresponding locks:

|  | Explicit Share | Explicit Update | Explicit Exclusive | Intent Share | Intent Exclusive | Implicit Share | Implicit Exclusive |
|---|---|---|---|---|---|---|---|
| Explicit Share | Y | N | N | Y | N | Y | N |
| Explicit Update | N | N | N | Y | N | Y | N |
| Explicit Exclusive | N | N | N | N | N | N | N |
| Intent Share | Y | Y | N | Y | Y | Y | N |
| Intent Exclusive | N | N | N | Y | Y | N | N |
| Implicit Share | Y | Y | N | Y | N | Y | N |
| Implicit Exclusive | N | N | N | N | N | N | N |

**Patentansprüche**

1. Ein Mehrplatzsystem (10) zur Verwaltung einer Datenbank (16), die eine Vielzahl von Datenobjekten umfaßt, die in einer Hierarchie angeordnet sind, wobei das System folgendes umfaßt:

einen Dateizugriffsprozessor (12) zum Zugreifen auf die Datenbank und zum Verwalten von Anforderungen bezüglich der Datenobjekte;

eine Vielzahl von Prozessoren zur Anwendungsunterstützung (14), die an den Dateizugriffsprozessor gekoppelt sind, wobei jeder der Prozessoren zur Anwendungsunterstützung Mittel zur Übertragung einer Anforderung an den Dateizugriffsprozessor umfaßt, ein angegebenes erstes Datenobjekt zu lesen und/oder zu aktualisieren, und eine explizite Anforderung einer aus einer Vielzahl expliziter Sperren an das erste Datenobjekt gemäß der Lese- und/oder Aktualisierungsanforderung, und eine Datenverarbeitungsanforderung, ein angegebenes zweites Datenobjekt zu lesen und/oder zu aktualisieren, ohne explizit eine explizite Sperre an irgendeinem der Datenobjekte anzufordern; und wobei

der Dateizugriffsprozessor Mittel (56) umfaßt, die auf die explizite Anforderung einer expliziten Sperre an dem ersten Datenobjekt reagieren, um die explizite Sperre nur an dem ersten Datenobjekt bereitzustellen, und Mittel (54), die auf die Datenverarbeitungsanforderung reagieren, das zweite Datenobjekt zu lesen und/oder zu aktualisieren, ohne explizit eine explizite Sperre an irgendeinem der Datenobjekte anzufordern, um eine aus einer Vielzahl impliziter Sperren an dem zweiten Datenobjekt und allen anderen Datenobjekten, die von demselben Knoten wie das zweite Datenobjekt in der Hierarchie abstammen, bereitzustellen; und

der Dateizugriffsprozessor Mittel umfaßt, die auf eine andere Anforderung reagieren, ein spezifisches Datenobjekt gemäß einer zugeordneten expliziten Sperre zu lesen oder zu aktualisieren, um zu bestimmen, ob ein Konflikt mit irgendeiner früher erstellten expliziten oder impliziten Sperre besteht; und wobei

die Vielzahl expliziter Sperren folgendes umfaßt: eine explizite Exklusivsperre, in welcher ein anfordernder Prozessor zur Anwendungsunterstützung (14) exklusiven Lese- und Aktualisierungszugriff auf das erste Datenobjekt hat und den anderen Prozessoren zur Anwendungsunterstützung jeglicher Zugriff auf das erste Datenobjekt und alle Sperren daran verwehrt werden, eine explizite Aktualisierungssperre, in der ein anfordernder Prozessor zur Anwendungsunterstützung (14) Lese- und Aktualisierungszugriff auf das erste Datenobjekt hat und ein anderer Prozessor zur Anwendungsunterstützung eine implizite Zugriffssperre an dem ersten Datenobjekt erhalten kann, und eine explizite Zugriffssperre, in welcher ein anfordernder Prozessor zur Anwendungsunterstützung (14) Lesezugriff auf das erste Datenobjekt hat und alle anderen Prozessoren zur Anwendungsunterstützung Lesezugriff auf das erste Datenobjekt haben, jedoch keinen Exklusivzugriff auf das erste Datenobjekt oder eine explizite Aktualisierungssperre, eine explizite Exklusivsperre oder eine implizite Exklusivsperre an dem ersten Datenobjekt erhalten können; und

die Vielzahl impliziter Sperren eine implizite Exklusivsperre an dem zweiten Datenobjekt umfaßt, in welcher den anderen Prozessoren zur Anwendungsunterstützung jeglicher Zugriff auf das zweite Datenobjekt und an alle expliziten und impliziten Sperren daran verwehrt werden, und eine implizite Zugriffssperre an dem zweiten Datenobjekt, in welchem die anderen Prozessoren zur Anwendungsunterstützung eine explizite Zugriffssperre, eine explizite Aktualisierungssperre und eine implizite Zugriffssperre an dem zweiten Datenobjekt erhalten können, ihnen aber eine explizite Exklusivsperre und eine implizite Exklusivsperre an dem zweiten Datenobjekt verwehrt werden.

2. Ein System wie in Anspruch 1 dargelegt, wobei

die Vielzahl impliziter Sperren eine Absichtexklusivsperre umfaßt, in welcher der anfordernde Prozessor zur Anwendungsunterstützung die Möglichkeit hat, später eine implizite Exklusivsperre statt der Absichtexklusivsperre an dem zweiten Datenobjekt zu erhalten, und eine Absichtzugriffssperre, in welcher der anfordernde Prozessor zur Anwendungsunterstützung die Möglichkeit hat, später eine implizite Zugriffssperre statt der Absichtzugriffssperre an dem zweiten Datenobjekt zu erhalten.

3. Ein System wie in Anspruch 2 dargelegt, wobei das Mittel zur Bestimmung, ob ein Konflikt existiert, die Konflikte wie durch die folgende Kompatibilitätstabelle angezeigt bestimmt, in welcher ein "Y" an irgendeiner Position Kompatibilität zwischen den entsprechenden Sperren anzeigt, und ein "N" an irgendeiner Position einen Konflikt zwischen den entsprechenden Sperren anzeigt:

|  | Expl. Zugr. | Expl. Akt. | Expl. Exkl. | Abs. Zugr. | Abs. Exkl. | Impl. Zugr. | Impl. Exkl. |
|---|---|---|---|---|---|---|---|
| Expliz. Zugriff | Y | N | N | Y | N | Y | N |
| Expliz. Aktualis. | N | N | N | Y | N | Y | N |
| Expliz. Exklusiv | N | N | N | N | N | N | N |
| Absicht Zugriff | Y | Y | N | Y | Y | Y | N |
| Absicht Exklusiv | N | N | N | Y | Y | N | N |
| Impliz. Zugriff | Y | Y | N | Y | N | Y | N |
| Impliz. Exklusiv | N | N | N | N | N | N | N |

**Revendications**

1. Système multi-utilisateurs (10) pour gérer une base de données (16) ayant une multitude d'objets de données arrangés selon une hiérarchie, ledit système comprenant:

un processeur d'accès de fichier (12) pour avoir accès à la base de données et gérer des requêtes relatives auxdits objets de données,

une pluralité de processeurs de support d'applications (14) connectés au processeur d'accès de fichier, chacun desdits processeurs de support d'applications comprenant des moyens pour transmettre audit processeur d'accès de fichier une requête pour lire et/ou mettre à jour un premier objet de données spécifié et une requête explicite pour un parmi une pluralité de verrouillages explicites sur ledit premier objet de données suivant ladite requête de lecture et/ou mise à jour, et une requête de traitement de données pour lire et/ou mettre à jour un second objet de données spécifié sans demander explicitement un verrouillage explicite sur un desdits objets de données, et dans lequel

ledit processeur d'accès de fichier comprend des moyens (56) agissant en réponse à la requête explicite pour ledit verrouillage explicite sur ledit premier objet de données, pour fournir ledit verrouillage explicite seulement sur ledit premier objet de données, et des moyens (54) agissant en réponse à la requête de traitement de données pour lire et/ou mettre à jour ledit second objet de données sans demander explicitement un verrouillage explicite sur un des objets de données, pour fournir un parmi une pluralité de verrouillages implicites sur ledit second objet de données et tous les autres objets de données qui sont issus d'un même noeud que ledit second objet de données de ladite hiérarchie, et

ledit processeur d'accès de fichier comprend des moyens agissant en réponse à une autre requête pour lire ou mettre à jour un objet de données suivant un verrouillage explicite associé, pour déterminer si un conflit existe avec un verrouillage explicite ou implicite établi précédemment, et dans lequel

ladite pluralité de verrouillages explicites comprend un verrouillage exclusif explicite dans lequel un processeur de support d'applications demandeur (14) a un accès de lecture et mise à jour exclusif audit premier objet de données et les autres processeurs de support d'applications sont interdits d'accès à et de verrouillage sur ledit premier objet de données, un verrouillage de mise à jour explicite dans lequel un processeur de support d'applications (14) a un accès de lecture et de mise à jour audit premier objet de données et un autre processeur de support d'applications peut obtenir un verrouillage de partage implicite sur ledit premier objet, et un verrouillage de partage explicite dans lequel un processeur de support d'applications (14) a un accès de lecture audit premier objet de données et tous les autres processeurs de support d'applications ont un accès de lecture audit premier objet de données mais ne peuvent pas obtenir un accès exclusif à ou un verrouillage de mise à jour explicite, un verrouillage exclusif explicite ou un verrouillage exclusif implicite sur ledit premier objet de données, et

ladite pluralité de verrouillages implicites comprend un verrouillage exclusif implicite sur ledit second objet de données dans lequel les autres processeurs de support d'applications sont interdits d'accès à et de verrouillages explicites et implicites sur ledit second objet de données, et un verrouillage de partage implicite sur ledit second objet dans lequel les autres processeurs de support d'applications peuvent obtenir un verrouillage de partage explicite, un verrouillage de mise à jour explicite et un verrouillage de partage implicite sur ledit second objet de données mais sont interdits de verrouillage exclusif explicite et un verrouillage exclusif implicite sur ledit second objet de données.

2. Système selon la revendication 1, dans lequel ladite pluralité de verrouillages implicites comprend un verrouillage exclusif projeté dans lequel le processeur de support d'applications demandeur a l'option d'obtenir plus tard un verrouillage exclusif implicite à la place du verrouillage exclusif projeté sur ledit second objet de données, et un verrouillage de partage projeté dans lequel le processeur de support d'applications a l'option d'obtenir plus tard un verrouillage de partage implicite à la place du verrouillage de partage projeté sur ledit second objet de données.

3. Système selon la revendication 2, dans lequel les moyens pour déterminer si un conflit existe détermine les conflits comme indiqué dans la table de compatibilité suivante dans laquelle un "O" dans une position indique la compatibilité entre les verrouillages correspondants, et un "N" dans une position indique un conflit entre les verrouillages correspondants:

|  | Partage explicite | Mise à jour explicite | Exclusif explicite | Partage projeté | Exclusif projeté | Partage implicite | Exclusif implicite |
|---|---|---|---|---|---|---|---|
| Partage explicite | O | N | N | O | N | O | N |
| Mise à jour explicite | N | N | N | O | N | O | N |
| Exclusif explicite | N | N | N | N | N | N | N |
| Partage projeté | O | O | N | O | O | O | N |
| Exclusif projeté | N | N | N | O | O | N | N |
| Partage implicite | O | O | N | O | N | O | N |
| Exclusif implicite | N | N | N | N | N | N | N |

FIG. 1

_10_

_12_

20

24

| -36- | -40- | -42- | -44- | -46- | -50- |
|---|---|---|---|---|---|

26

| | | | | | | | | | |
|---|---|---|---|---|---|---|---|---|---|

| -30- | | -32- | | -34- |
|---|---|---|---|---|

-18-

-22-

16

-14-

-14-

-14-

-14-

-14-

_FIG.2_

52

54

54a    54c    54e

| | | | | | |
|---|---|---|---|---|---|

54b         54d   54f

-16-

-26-

| -56a- | -56b- | -56c- | -56d- |
|---|---|---|---|

56

_FIG.3_

|      | ES | EU | EX | IS | IX | S | SIX | X |
|------|----|----|----|----|----|----|-----|---|
| ES   | Y  | N  | N  | Y  | N  | Y  | N   | N |
| EU   | N  | N  | N  | Y  | N  | Y  | N   | N |
| EX   | N  | N  | N  | N  | N  | N  | N   | N |
| IS   | Y  | Y  | N  | Y  | Y  | Y  | Y   | N |
| IX   | N  | N  | N  | Y  | Y  | N  | N   | N |
| S    | Y  | Y  | N  | Y  | N  | Y  | N   | N |
| SIX  | N  | N  | N  | Y  | N  | N  | N   | N |
| X    | N  | N  | N  | N  | N  | N  | N   | N |

_Explicit Modes_
ES – Explicit Share
EU – Explicit Update
EX – Explicit Exclusive

_Implicit Modes_
IS – Intent Share
IX – Intent Exclusive
S – Share
SIX – Share with Intent Exclusive
X – Exclusive

_FIG.4_

_FIG.5_

14